# FASCICULE DE BREVET EUROPEEN

(11) **EP 2 799 994 B1**
(45) Date de publication et mention de la délivrance du brevet: **04.05.2022**
(21) Numéro de dépôt: 14166511.7
(22) Date de dépôt: 30.04.2014
(51) Int. Cl.: G06F 11/20, G06F 11/00, G06F 11/10

(54) **Procédé et dispositif de sauvegarde de données dans une infrastructure informatique offrant des fonctions de reprise d'activité**
Verfahren und Vorrichtung zur Datensicherung in einer IT-Infrastruktur, die Funktionen zur Wiederinbetriebnahme umfasst
Method and device for backing up data in a computer infrastructure providing activity recovery functions

(30) Priorité: 02.05.2013 FR 1354054
(43) Date de publication de la demande: 05.11.2014
(73) Titulaire: BULL SAS, 78340 Les Clayes-sous-Bois (FR)
(72) Inventeur: Gerphagnon, Jean-Olivier, 38180 Seyssins (FR); Marchand, Corine, 38000 Grenoble (FR); Lachamp, Philippe, 38360 Sassenage (FR)
(74) Mandataire: Argyma

(56) Documents cités:
- WO-A1-2004/025470
- US-A1- 2002 016 827
- US-A1- 2003 126 107
- US-A1- 2004 260 736
- US-A1- 2011 055 501

## Description

La présente invention concerne la sauvegarde de données dans un système informatique multi-sites et plus particulièrement un procédé et un dispositif de sauvegarde de données, notamment pour calculateurs ou calculateurs haute performance, dans une infrastructure informatique offrant des fonctions de reprise d'activité.

Une infrastructure informatique offrant des fonctions de reprise d'activité (appelée *disaster recovery* en terminologie anglo-saxonne) a pour objet de permettre, en cas de crises majeures ou importantes d'un centre informatique liées, par exemple, à un tremblement de terre ou une attaque terroriste, la remise en route de ce centre informatique. Elle permet ainsi, en cas de sinistre, la mise en place d'un système informatique capable de prendre en charge les besoins informatiques nécessaires à une continuité de service dont dépend généralement la survie d'une entreprise.

Il convient, dans une infrastructure informatique offrant des fonctions de reprise d'activité, de pouvoir fournir et mettre en oeuvre des ressources nécessaires à l'exécution d'applications mais également d'offrir une méthode de récupération de données.

A ces fins, toutes ou parties des données traitées et stockées par un centre informatique d'une infrastructure informatique offrant des fonctions de reprise d'activité sont répliquées, c'est-à-dire copiées et maintenues à jour, dans au moins un autre centre informatique d'un autre site.

Cette réplication de données peut être réalisée selon un mode de sauvegarde synchrone selon lequel des données écrites ou modifiées sur un disque locale sont immédiatement recopiées ou modifiées sur un disque distant ou un mode de sauvegarde asynchrone selon lequel les données modifiées sont recopiées ou modifiées à des intervalles réguliers.

La réplication de données dans une infrastructure informatique offrant des fonctions de reprise d'activité et faisant intervenir au moins deux sites distants, comprenant chacun une copie conforme de l'ensemble des données de l'autre site distant, est un problème complexe.

Tout d'abord, il est nécessaire de relier les sites distants les uns aux autres à l'aide de liens de communication offrant des débits suffisants pour permettre la réplication des données. A ces fins, des liens dédiés à haut-débit, tels que des liens à fibre optique, peuvent être utilisés.

Par ailleurs, comme observé précédemment, il faut synchroniser les données entre les sites distants. La synchronisation utilise des mécanismes logiciels et/ou matériels mettant typiquement en oeuvre des outils permettant de détecter des modifications des données afin d'identifier les données à répliquer.

Enfin, les mécanismes de réplication doivent perturber le moins possible les dispositifs de stockage mis en oeuvre sur chaque site, notamment durant les phases d'écriture, pour ne pas dégrader les performances des systèmes informatiques mis en œuvre sur chaque site.

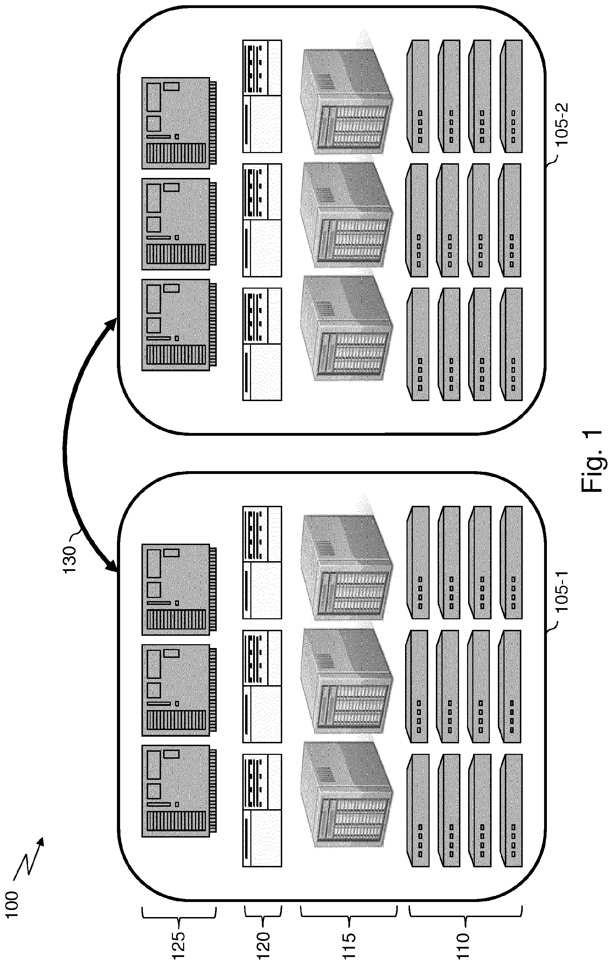

La figure 1 illustre un exemple d'une infrastructure informatique offrant des fonctions de reprise d'activité. Cette infrastructure 100 met ici en œuvre deux sites distincts 105-1 et 105-2 comprenant chacun des nœuds de calcul 110, des baies de stockage 115, des serveurs de stockage 120 et des passerelles 125. Un lien de communication haut débit 130 relie les systèmes informatiques des sites 105-1 et 105-2 permettant ainsi une réplication des données d'un site sur l'autre. Alors que les systèmes informatiques des sites 105-1 et 105-2 sont ici identiques, ils peuvent être différents.

Il est observé que l'accès aux données dans des baies de stockage, via des serveurs dédiés tels que, par exemple, des serveurs d'entrée/sortie mettant en œuvre des systèmes de fichiers locaux, partagés et/ou parallèles, par exemple Lustre ou NFS (sigle de *Network File System* en terminologie anglo-saxonne), est souvent critique, en particulier dans le contexte de calculateurs haute-performance. En effet, dans un tel contexte, la performance d'accès aux données est généralement extrêmement importante et aucun événement prévu (par exemple la synchronisation de données avec un site distant) ou imprévu ne doit venir perturber les accès en écriture et/ou lecture sur les systèmes de stockage. En d'autres termes, la récupération de données ne doit avoir aucun impact réel sur le système de stockage de données depuis lequel des données sont récupérées ou, à tout le moins, un impact aussi faible que possible.

Le document US 2004/260736 A1 décrit un dispositif de sauvegarde de données dans une infrastructure informatique pour une réplication à distance de données. Cependant, dans cette solution, le système de surveillance contrôle à distance les contrôleurs et adresse uniquement un flux de commandes à chacun desdits premier et second contrôleurs de mémoire, ce qui peut présenter des inconvénients dans la gestion des flux de données, notamment lors d'une réplication à distance des données.

L'invention permet de résoudre au moins un des problèmes exposés précédemment.

L'invention a ainsi pour objet un dispositif de sauvegarde de données dans une infrastructure informatique offrant des fonctions de reprise d'activité selon la revendication 1.

Le dispositif selon l'invention permet ainsi de limiter les effets d'une réplication de données sur la performance d'un système de stockage dans le cas d'une synchronisation multi-sites ou multi-stockage.

Selon un mode de réalisation particulier, ledit microcontrôleur est en outre configuré pour synchroniser un ensemble de données mémorisées dans ledit second ensemble de moyens de stockage avec un ensemble de données correspondantes mémorisées dans ledit premier ensemble de moyens de stockage suite à une réplication à distance et avant une réplication locale.

Toujours selon un mode de réalisation particulier, ledit premier ensemble de moyens de stockage comprend au moins deux sous-ensembles de moyens de stockage permettant une duplication de données entre lesdits au moins deux sous-ensembles de moyens de stockage afin d'améliorer la fiabilité du système de stockage.

Toujours selon un mode de réalisation particulier, lesdits au moins deux sous-ensembles de moyens de stockage sont configurés pour mémoriser des mêmes éléments de données.

L'invention a également pour objet un procédé pour ordinateur de sauvegarde de données dans une infrastructure informatique offrant des fonctions de reprise d'activité, selon la revendication 4.

Le procédé selon l'invention permet ainsi de limiter les effets d'une réplication de données sur la performance d'un système de stockage dans le cas d'une synchronisation multi-sites ou multi-stockage.

Selon un mode de réalisation particulier, le procédé comprend en outre une étape de synchronisation pour synchroniser un ensemble de données mémorisées dans ledit second ensemble de moyens de stockage avec un ensemble de données correspondantes mémorisées dans ledit premier ensemble de moyens de stockage suite à une réplication à distance.

Toujours selon un mode de réalisation particulier, le procédé comprend en outre une étape de duplication de données mémorisées dans un premier sous-ensemble de moyens de stockage dudit premier ensemble de moyens de stockage dans un second sous-ensemble de moyens de stockage dudit premier ensemble de moyens de stockage afin d'améliorer la fiabilité du système de stockage.

Toujours selon un mode de réalisation particulier, le procédé comprend en outre une étape préalable de copie de données d'un troisième ensemble de moyens de stockage vers ledit premier ensemble de moyens de stockage.

Toujours selon un mode de réalisation particulier, ladite commande de réplication à distance est générée de façon périodique.

L'invention a également pour objet un programme d'ordinateur comprenant des instructions adaptées à la mise en œuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple d'une infrastructure informatique offrant des fonctions de reprise d'activité ;
- les figures 2 et 3 illustrent schématiquement le stockage d'une donnée sous forme d'éléments de données et d'éléments de données de redondance dans un ensemble de disques ;
- la figure 4 illustre un exemple de système de stockage selon un mode de réalisation particulier de l'invention ;
- la figure 5, comprenant les figures 5a, 5b et 5c, illustre schématiquement une phase d'accès en lecture et/ou en écriture à des données, permettant une réplication locale de données (réplication de premier niveau), une phase de réplication à distance de données (réplication de second niveau) et une phase de mise à jour, respectivement, dans un système de stockage tel que celui décrit en référence à la figure 4 ;
- la figure 6 illustre schématiquement certaines étapes d'un exemple d'algorithme de réplication de données selon un mode de réalisation particulier de l'invention ; et
- la figure 7 illustre un système de stockage comprenant plusieurs sous-systèmes de stockage standard et au moins un sous-système de stockage tel que celui décrit en référence à la figure 4, offrant un double niveau de réplication tout en limitant le coût du système de stockage.

De façon générale, l'invention permet, selon un mode de réalisation particulier, en utilisant une technologie de type RAID (acronyme de *Redundant Array of Independent Disks* en terminologie anglo-saxonne) et un double contrôleur de disques, plus généralement appelé contrôleur de mémoire ci-après, sur chaque système de stockage d'au moins l'un des sites distants, durant une phase de synchronisation de données, de ne pas perturber les performances du site où se trouvent les données d'origine (site émetteur) tout en synchronisant ces données sur le site où elles sont répliquées (site récepteur).

Selon des modes de réalisation particuliers, un double contrôleur de mémoire est présent sur chaque ou certains systèmes de stockage de chaque ou certains sites distants, avec un mode de communication unidirectionnelle, bidirectionnelle ou multidirectionnelle.

Selon un mode de réalisation particulier, les données sont répliquées à deux niveaux (un premier niveau correspondant à une réplication locale et un second niveau correspondant à une réplication à distance) et de façon asynchrone, c'est-à-dire selon des intervalles de temps prédéterminés, par exemple toutes les trente minutes. Cette solution est ici basée sur l'utilisation d'un contrôleur de mémoire supplémentaire et de moyens de duplication d'un flux de commandes et de données.

Il est tout d'abord rappelé ici qu'un mécanisme de stockage de données de type RAID utilise plusieurs moyens de stockage distincts, typiquement des disques durs, mémorisant chacun une partie d'une donnée. Un tel mécanisme permet, en particulier, d'améliorer le temps d'accès aux données, en lecture et en écriture, en parallélisant plusieurs tâches, et d'améliorer la fiabilité de stockage. En effet, en utilisant des disques pour mémoriser des données redondantes et/ou de parité, généralement obtenues à partir de mécanismes distincts, génériquement appelées données de redondance, il est possible de recouvrer des données lorsque des parties de données mémorisées sur des disques sont perdues.

Un exemple d'un tel mécanisme est connu sous le nom de RAID-6 DP (sigle de *Dual Parity* en terminologie anglo-saxonne). Selon celui-ci, un système de stockage peut comprendre, par exemple, huit disques pour stocker des données et deux disques pour stocker des données de redondance (système de stockage 8 + 2). De tels systèmes permettent de mettre en œuvre un mécanisme de quorum permettant de détecter et corriger des erreurs.

Il convient de noter ici que n'importe quel autre mécanisme de type RAID mettant en œuvre un mécanisme de réplication de données peut être utilisé.

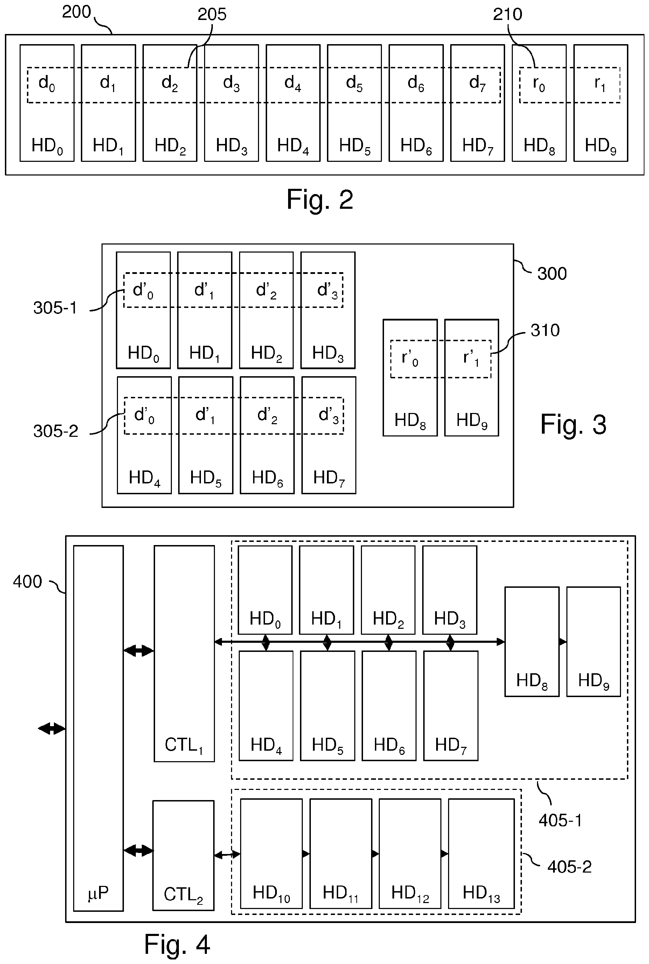

Ainsi, à titre d'exemple et comme représenté sur la figure 2, une donnée D peut être divisée en huit éléments de données do à *d*₇, chacun étant stocké sur un disque particulier (disques de données *HD₀* à *HD*₇*)* d'un système de stockage 200 comprenant dix disques durs. Ces éléments de données do à *d₇* sont utilisés pour calculer des éléments de redondance *r₀* et *r*₁ qui sont chacun stocké sur un disque particulier (disques de parité *HD₈* et *HD₉*)*.* La donnée D est ainsi stockée sous la forme de huit éléments de données référencés 205 et deux éléments de redondance référencés 210.

Selon un mode de réalisation particulier, les huit disques utilisés pour stocker les données peuvent être regroupés deux à deux, chaque paire de disques comprenant les mêmes parties d'une donnée (mécanisme connu sous le nom de RAID-0 ou *mirroring* en terminologie anglo-saxonne). Ainsi, en cas de défaillance d'un disque d'une paire de disques, la donnée peut être reconstruite. Les données de redondance permettent de détecter et, le cas échéant, corriger une erreur qui affecterait deux disques d'une même paire de disques.

Comme représenté sur la figure 3, une donnée D est ici divisée en quatre éléments de données d'o à *d'₃*, chacun étant stocké sur deux disques particuliers distincts noté HD d'un système de stockage 300 comprenant dix disques durs. Ces éléments de données d'o à *d'₃* sont utilisés pour calculer des éléments de redondance *r'₀* et *r'₁* qui sont chacun stocké sur un disque particulier (disques de parité). La donnée D est ainsi stockée deux fois sous la forme de quatre éléments de donnée référencés 305-1 et 305-2 et de deux éléments de redondance référencé 310.

La lecture et l'écriture de données dans le système de stockage 300 sont contrôlées par un contrôleur de mémoire (non représenté) en charge de traiter un flux de commandes et de données issu d'un microprocesseur, c'est-à-dire convertir ce flux en requêtes de lecture et d'écriture.

Selon un mode de réalisation particulier de l'invention, un niveau local de réplication est ajouté au système de stockage. Un second contrôleur de mémoire est associé à ce niveau local de réplication. Un microcontrôleur (ou microprocesseur) est ici en charge d'orienter un même flux de commandes et de données vers les deux contrôleurs de mémoire dans un mode normal d'utilisation et de permettre des accès distincts aux deux contrôleurs de mémoire dans un mode de réplication déportée.

La figure 4 illustre un exemple de système de stockage selon un mode de réalisation particulier de l'invention. Comme illustré, le système de stockage 400 comprend deux ensembles de disques durs 405-1 et 405-2. Chaque disque du premier ensemble de disques durs 405-1, référencés *HD₀* à *HD₉,* est relié à un premier contrôleur de mémoire *CTL₁* tandis que chaque disque du second ensemble de disques durs 405-2, référencés *HD₁₀* à *HD₁₃,* est relié à un second contrôleur de mémoire *CTL₂.*

Le premier ensemble de disques 405-1 comprend plusieurs paires de disques (ici les paires *HD₀-HD₄, HD₁-HD₅, HD₂-HD₆* et *HD₃-HD₇),* chaque disque d'une même paire étant utilisé pour stocker un même élément de donnée comme décrit en référence à la figure 3, ainsi que des disques de parité (ici les disques *HD₈* et *HD₉*). Alternativement, chaque disque du premier ensemble de disques 405-1 peut être utilisé pour stocker des éléments de données ou des éléments de données de redondance différents.

Le second ensemble de disques durs 405-2 comprend autant de disques (ici les disques *HD₁₀* à *HD₁₃*) qu'il y a de paires de disques dans le premier ensemble de disques 405-1, chaque disque du second ensemble de disques durs 405-2 stockant un élément de donnée stocké dans chaque disque d'une paire de disques distincte. En d'autres termes, un même élément de donnée est stocké dans chaque disque d'une paire de disques du premier ensemble de disques durs 405-1 et dans un disque du second ensemble de disques durs 405-2, offrant un premier niveau de réplication (réplication locale). Alternativement, lorsque chaque disque du premier ensemble de disques 405-1 est utilisé pour stocker des éléments de données ou des éléments de données de redondance différents, le second ensemble de disques durs 405-2 comprend autant de disques qu'il y a de disques dans le premier ensemble de disques 405-1 utilisés pour stocker des éléments de données.

Les contrôleurs de mémoire *CTL₁* et *CTL₂* sont par ailleurs reliés à un microcontrôleur (ou microprocesseur) *µP* qui a notamment pour objet de connecter les contrôleurs de mémoire *CTL₁* et *CTL₂* à un même dispositif externe ou à deux dispositifs distincts. Alternativement, un circuit logique de type ASIC (acronyme *d'Application-Specific Integrated Circuit* en terminologie anglo-saxonne) peut être utilisé.

Dans un mode normal d'utilisation, le microcontrôleur *µP* est en charge d'orienter un même flux de commandes et de données vers les deux contrôleurs de mémoire *CTL₁* et *CTL₂.* Le flux de commandes et de données orienté vers les deux contrôleurs de mémoire est ici celui destiné au premier contrôleur associé à l'ensemble de disques comprenant les disques utilisés pour stocker les données de redondance.

Dans ce mode d'utilisation, les commandes de lecture sont typiquement ignorées par le second contrôleur de mémoire *CTL₂* de telle sorte que des données puissent être obtenues, de façon classique, des disques du premier ensemble de disques. Cependant, selon un mode de réalisation particulier, des éléments de données stockés dans un ou plusieurs disques du second ensemble de disques peuvent être utilisés, notamment si deux disques d'une même paire de disques du premier ensemble de disques sont défaillants.

Les commandes d'écriture sont traitées en parallèle par chaque contrôleurs de mémoire *CTL₁* et *CTL₂,* de telle sorte que les éléments de données soient stockés de façon redondante dans chaque disque d'une paire de disques du premier ensemble de disques et dans un disque du second ensemble de disque (réplication locale).

Dans un mode particulier d'utilisation, permettant une réplication des données de second niveau (réplication à distance), le microcontrôleur *µP* est en charge d'orienter deux flux distincts de commandes et de données vers les deux contrôleurs de mémoire *CTL₁* et *CTL₂,* de façon distincte, de telle sorte que des éléments de données soient accessibles (en lecture et en écriture) dans chaque disque du premier ensemble de disques, par un premier dispositif externe, et que, de façon indépendantes, les mêmes ou d'autres éléments de données, soient accessibles (typiquement en lecture seule) dans chaque disque du second ensemble de disques, par un second dispositif externe. Le premier dispositif est, par exemple, un nœud de calcul d'une grappe de calcul haute performance (ou cluster HPC, sigle de *High Performance Computing,* en terminologie anglo-saxonne) tandis que le second dispositif externe peut être un système informatique d'un site distant, typiquement un système de stockage sur lequel les données sont répliquées (second niveau de réplication correspondant à une réplication à distance).

L'architecture illustrée sur la figure 4 permet ainsi, tout d'abord, de gérer un premier niveau de réplication de données sur le second ensemble de disques de façon simultanée à la gestion des accès en lecture et en écriture sur le premier ensemble de disques, sans dégrader les performances du système de stockage. Cette architecture permet également, lors de la réplication de données selon un second niveau de réplication, durant une phase de réplication à distance, à partir du second ensemble de disques, de laisser le premier ensemble de disques totalement opérationnel. En d'autres termes, les performances du premier ensemble de disques, en lecture et/ou en écriture, ne sont pas impactées par une réplication de données effectuée à partir du second ensemble de disques.

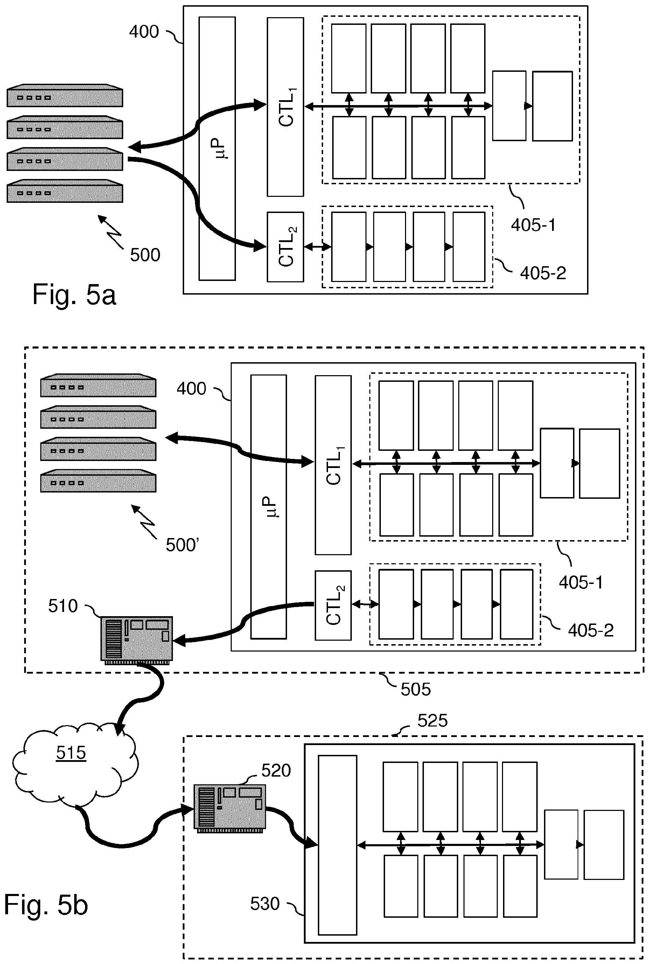

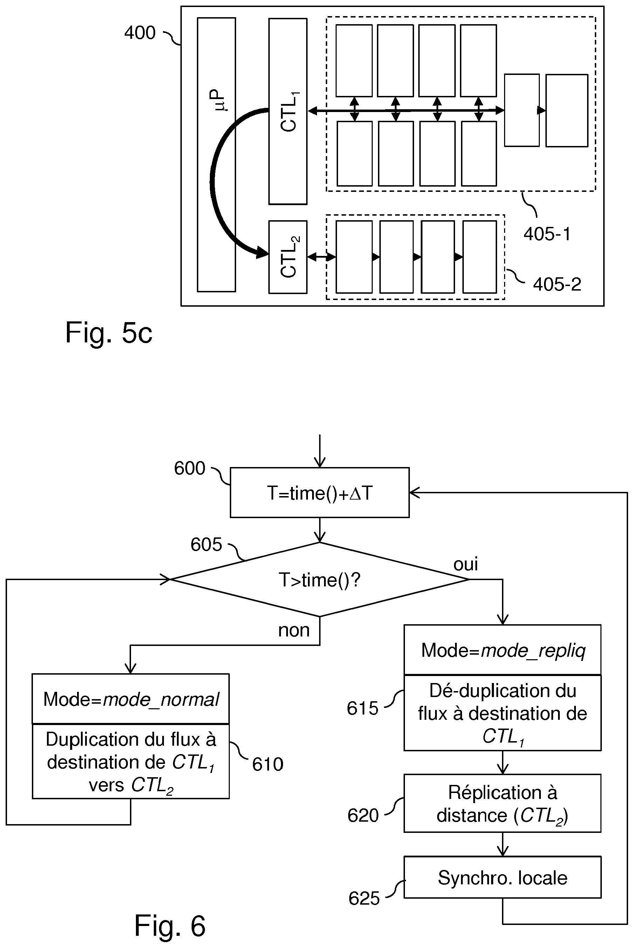

La figure 5, comprenant les figures 5a, 5b et 5c, illustre schématiquement une phase d'accès en lecture et/ou en écriture à des données, permettant une réplication locale de données (réplication de premier niveau), une phase de réplication à distance de données (réplication de second niveau) et une phase de mise à jour, respectivement, dans un système de stockage tel que celui décrit en référence à la figure 4. Le microcontrôleur *µP* est ici utilisé, en particulier, pour contrôler un mode d'utilisation permettant de gérer ces phases.

Comme illustré sur la figure 5a, le système de stockage 400 permet, dans une phase normale d'utilisation, à l'aide d'un microcontrôleur *µP*, d'orienter un même flux de commandes et de données vers les deux ensembles de disques 405-1 et 405-2 du système via les deux contrôleurs de mémoire *CTL₁* et *CTL₂* (chacun associé à un ensemble de disques). Comme décrit précédemment, pour éviter des conflits lors de la lecture de données à partir du système, les commandes de lecture reçues par le contrôleur de mémoire *CTL₂* sont ignorées (alternativement, elles ne lui sont pas transmises). En d'autres termes, l'accès au contrôleur de mémoire *CTL₂* ne se fait qu'en écriture.

Les commandes d'écriture sont traitées en parallèle par chaque contrôleur de mémoire *CTL₁* et *CTL₂,* de telle sorte que les éléments de données soient stockés de façon redondante dans chaque disque d'une paire de disques du premier ensemble de disques et dans un disque du second ensemble de disques (réplication locale).

Ainsi, dans une phase d'utilisation normale, le système 400 peut recevoir des données de dispositifs 500, par exemple des nœuds de calcul, pour les stocker et transmettre des données à ces dispositifs. Les données mémorisées dans le système de stockage 400 sont, par exemple, des données générées ou traitées localement, par exemple des données issues des dispositifs 500.

Dans une phase de réplication, illustrée sur la figure 5b, le microcontrôleur *µP* est configuré pour orienter deux flux distincts de commandes et de données vers les deux contrôleurs de mémoire *CTL₁* et *CTL₂,* de façon distincte.

Ainsi, selon l'exemple représenté, des éléments de données sont accessibles (en lecture et en écriture) dans chaque disque du premier ensemble de disques 405-1, via le contrôleur de mémoire *CTL₁,* par les dispositifs 500 qui, comme le système de stockage 400, appartiennent ici au système informatique 505 d'un premier site.

Le système informatique 505 comprend en outre une passerelle 510 qui permet l'établissement d'un lien de communication, via un réseau de communication 515, avec une passerelle 520 d'un système informatique 525 d'un second site. Ainsi, selon l'exemple présenté, des éléments de données peuvent être recopiés de disques du second ensemble de disques du système de stockage 400 vers un système de stockage 530 du second site pour permettre à ce dernier de mémoriser des données stockées dans des disques du second ensemble de disques (réplication à distance). Une telle réplication est effectuée de façon périodique, à titre d'illustration toutes les trente minutes, ou, par exemple, lorsque le volume de données modifiées atteint un seuil prédéterminé.

L'accès au contrôleur de mémoire *CTL₂* ne se fait, durant cette phase de réplication, qu'en lecture.

Comme décrit précédemment, le contenu de chaque disque du second ensemble de disques doit correspondre au contenu des disques de chaque paire de disques du premier ensemble de disques (premier niveau de réplication) pour permettre, par réplication de ces données, la reprise d'activité selon le mode de réalisation décrit précédemment. Par conséquent, après que des flux de commandes et de données différents aient été orientés vers les contrôleurs de mémoire *CTL₁* et *CTL₂,* c'est-à-dire durant une phase de réplication, il convient de mettre à jour le contenu des disques du second ensemble de disques au regard du contenu des disques du premier ensemble de disques.

Une telle mise à jour est avantageusement réalisée à l'issue d'une phase de réplication à distance. Elle concerne les données mémorisées dans les disques du premier ensemble de disques, qui ont été modifiées, ajoutées et/ou supprimées depuis la dernière mise à jour. Cette phase de mise à jour durant laquelle des éléments de données de disques du premier ensemble de disques sont copiés vers des disques du second ensemble de disques est représentée sur la figure 5c. Elle est ici effectuée par le microcontrôleur *µP* via les contrôleurs de mémoire *CTL₁* et *CTL₂.*

Ainsi, en d'autres termes, un principe du mode de réalisation décrit ici est la désactivation de la synchronisation de la réplication de données entre les deux contrôleurs de mémoires utilisés dans le système de stockage (réplication de premier niveau) durant la phase de réplication vers le site distant (réplication de second niveau). Les données répliquées à distance sont donc les données mémorisées dans le second ensemble de disques lors de la désactivation de la synchronisation. La réplication à distance est effectuée à l'aide du second contrôleur de mémoire, sans perturber le premier contrôleur de mémoire (ce qui permet à des dispositifs, typiquement des nœuds de calcul, d'utiliser le système de stockage, à l'aide du premier contrôleur de mémoire, sans perturbation particulière).

Après que la synchronisation des données répliquées à distance a été effectuée (réplication de second niveau), l'espace de stockage utilisé pour cette réplication déportée est mis à jour, par exemple en utilisant un mécanisme de reconstruction de type RAID. Puis, la synchronisation de la réplication locale de données entre les deux contrôleurs de mémoires utilisés dans le système de stockage, par duplication du flux de commandes et de données vers les deux contrôleurs de mémoire utilisés, est réactivée.

Il est observé ici que la mise à jour de l'espace de stockage utilisé pour la réplication déportée peut être basée sur des accès à un seul disque de chaque paire de disques du premier ensemble de disques.

La figure 6 illustre schématiquement certaines étapes d'un exemple d'algorithme de réplication de données selon un mode de réalisation particulier de l'invention. Un tel procédé peut notamment être mis en œuvre dans un microcontrôleur tel que le microcontrôleur µP illustré sur la figure 4 ou, plus généralement, dans un ordinateur.

Comme illustré, une première étape (étape 600) a pour objet la détermination de l'instant présent à l'aide d'une fonction standard, appelée ici *time(),* et la mémorisation de cet instant, incrémenté d'une durée prédéterminée *ΔT* qui représente la périodicité de réplication déportée, dans une variable *T.*

Un test est ensuite effectué (étape 605) pour déterminer si la valeur de la variable *T* est supérieure à l'instant présent tel que déterminé ici avec la fonction *time(),* c'est-à-dire s'il convient d'effectuer une réplication à distance.

Si la valeur de la variable *T* est inférieure ou égale à l'instant présent, le système de stockage est placé ou maintenu dans un mode normal d'utilisation (*mode_normal*) selon lequel le flux de commandes et de données adressé au premier contrôleur de mémoire (*CTL₁*) est dupliqué pour être également adressé au second contrôleur de mémoire (*CTL₂*) permettant ainsi une réplication locale des données dans le second ensemble de disques (étape 610). Comme illustré, cette étape est répétée tant que la valeur de la variable *T* est inférieure ou égale à l'instant présent (et que le système n'est pas arrêté).

Si, au contraire, la valeur de la variable *T* est supérieure à l'instant présent, le système de stockage est placé dans un mode de particulier d'utilisation *(mode_repliq)* selon lequel le flux de commandes et de données adressé au premier contrôleur de mémoire (*CTL₁*) est dé-dupliqué, s'il l'était, pour n'être adressé qu'au premier contrôleur de mémoire (étape 615). Les données mémorisées dans le second ensemble de disques sont alors répliquées à distance comme décrit précédemment (étape 620).

Dans une étape suivante, une synchronisation est effectuée (étape 625) de telle sorte que les données mémorisées dans le second ensemble de disques correspondent aux données mémorisées dans le premier ensemble de disques. Comme illustré, à l'issue de cette étape, l'algorithme reboucle à l'étape 600 pour réinitialiser la variable *T* et répéter les étapes précédentes.

Bien qu'une commande de réplication déportée soit ici générée de façon périodique, en comparant le temps courant avec un temps courant passé incrémenté de la période, une telle commande peut être générée selon d'autres critères, par exemple selon un volume de données modifiées (typiquement comparé à un seuil), ou par d'autres applications.

Selon un mode de réalisation particulier, utilisant une fonction de migration de données, plusieurs systèmes de stockage locaux sont utilisés et seul un (ou plusieurs) système de stockage est pourvu d'un second contrôleur de mémoire et de moyens de duplication d'un flux de commandes et de données. Ainsi, il est possible de migrer, vers le système de stockage pourvu de ce second contrôleur de mémoire et de ces moyens de duplication, toutes les données ayant été modifiées depuis une dernière réplication à distance. Il est alors possible de mettre en œuvre un processus similaire à celui décrit en référence aux figures 5 et 6.

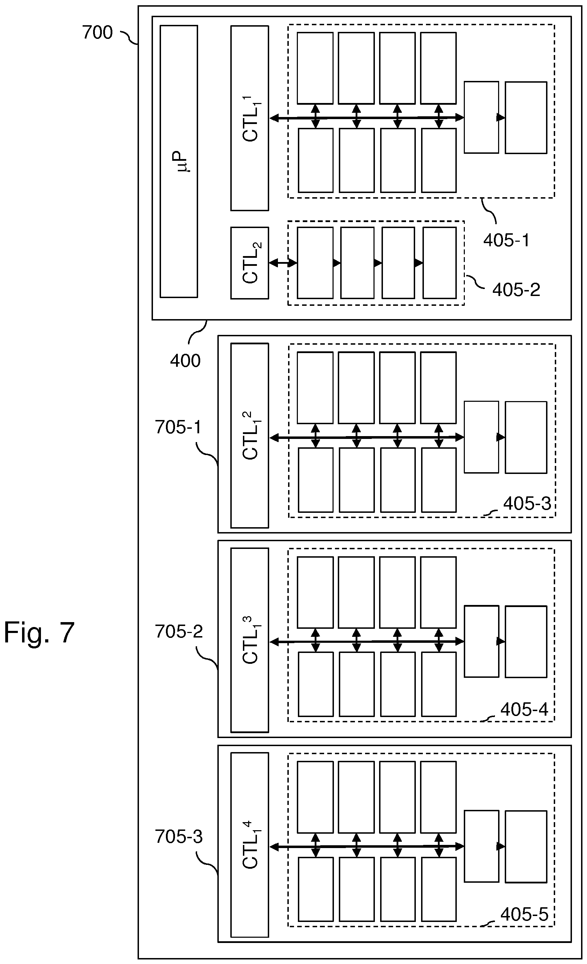

La figure 7 illustre un système de stockage comprenant plusieurs sous-systèmes de stockage standard et au moins un sous-système de stockage tel que celui décrit en référence à la figure 4, offrant un double niveau de réplication tout en limitant le coût du système de stockage.

Dans l'exemple représenté, le système de stockage 700 comprend un sous-ensemble de stockage 400 tel que celui décrit en référence à la figure 4, comprenant deux ensembles de disques notés 405-1 et 405-2 auxquels sont associés deux contrôleurs de mémoire *CTL₁¹* et *CTL₂.*

Le système de stockage 700 comprend en outre, ici, trois sous-systèmes de stockage standard référencés 705-1 à 705-3 comprenant chacun un ensemble de disques (405-3 à 405-5, respectivement) auquel est associé un contrôleur de mémoire (*CTL₁², CTL₁³* et *CTL₁³*)*.*

Dans cette architecture, toutes les données modifiées depuis la dernière réplication à distance sont copiées dans les ensembles de disques 405-1 et 405-2 pour permettre une réplication à distance sans réelle perturbation des dispositifs accédant aux données mémorisées dans le système de stockage. Ainsi, lorsqu'une opération de réplication à distance doit être effectuée, le mécanisme mis en œuvre est similaire à celui décrit en référence aux figures 5 et 6. Il comprend, préalablement à l'étape de déduplication du flux de commandes et de données, une étape de copie des données modifiées dans les ensembles de disques 405-1 et 405-2.

Les données à répliquer peuvent être traitées, lors de leur copie vers l'ensemble de disques 405-1 permettant la réplication à distance sans réelle perturbation, au niveau du système de fichiers, bloc par bloc ou bit-à-bit (aussi appelé mode *raw* en terminologie anglo-saxonne). Un tel choix est effectué selon les besoins et les contraintes de mise en œuvre. La copie par fichiers nécessite une gestion par système de fichiers sur chacun des systèmes impliqués. La copie bit-à-bit nécessite, quant à elle, de déterminer l'adresse physique de l'endroit où sont stockées les données à copier. Une telle adresse est généralement déterminée à partir d'informations obtenues via un système de fichiers.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles. En particulier, l'invention peut être mise en œuvre avec des systèmes de stockage de différentes natures, par exemple des mémoires de masse utilisant des disques durs de type magnétique, des disques durs de type optique, des disques durs de type SSD (sigle de *Solid State Device* en terminologie anglo-saxonne) et/ou des combinaisons de telles mémoires de masse.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en œuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Dispositif de sauvegarde de données dans une infrastructure informatique offrant des fonctions de reprise d'activité, ce dispositif étant **caractérisé en ce qu'**il comprend les moyens suivants,
- au moins un premier (405-1) et un second (405-2) ensembles de moyens de stockage ;
- au moins un premier (CTL₁) et un second (*CTL₂*) contrôleurs de mémoire, ledit premier contrôleur de mémoire étant associé audit premier ensemble de moyens de stockage et ledit second contrôleur de mémoire étant associé audit second ensemble de moyens de stockage ; et
- microcontrôleur (µP) configuré :
∘ pour dupliquer un flux de commandes et de données à destination dudit premier contrôleur de mémoire vers ledit second contrôleur de mémoire dans un mode d'utilisation normale permettant une réplication locale de données dans ledit second ensemble de moyens de stockage ;
∘ pour adresser un flux de commandes et de données distincts à chacun desdits premier et second contrôleurs de mémoire dans un mode de réplication à distance de telle sorte que des éléments de données soient accessibles en lecture et en écriture dans chaque disque du premier ensemble de disques, par un premier dispositif externe, et que, de façon indépendantes, les mêmes ou d'autres éléments de données, soient accessibles en lecture seule dans chaque disque du second ensemble de disques, par un second dispositif externe; et
∘ pour synchroniser un ensemble de données mémorisées dans ledit second ensemble de moyens de stockage avec un ensemble de données correspondantes mémorisées dans ledit premier ensemble de moyens de stockage avant une réplication locale et suite à une réplication à distance par le second contrôleur de mémoire, à partir des données du second ensemble de moyens de stockage ;
le microcontrôleur étant en outre configuré pour désactiver la synchronisation de la réplication locale de données entre les deux contrôleurs, durant la phase de réplication à distance et pour réactiver la synchronisation de la réplication locale de données entre les deux contrôleurs lorsque la phase de réplication à distance est terminée.

2. Dispositif selon la revendication 1 selon lequel ledit premier ensemble de moyens de stockage comprend au moins deux sous-ensembles de moyens de stockage permettant une duplication de données entre lesdits au moins deux sous-ensembles de moyens de stockage.

3. Dispositif selon la revendication 2 selon lequel lesdits au moins deux sous-ensembles de moyens de stockage sont configurés pour mémoriser des mêmes éléments de données.

4. Procédé pour ordinateur de sauvegarde de données dans une infrastructure informatique offrant des fonctions de reprise d'activité, ce procédé étant **caractérisé en ce qu'**il permet la sauvegarde de données dans un dispositif comprenant au moins un premier (405-1) et un second (405-2) ensembles de moyens de stockage, au moins un premier (CTL₁) et un second (*CTL₂*) contrôleurs de mémoire, ledit premier contrôleur de mémoire étant associé audit premier ensemble de moyens de stockage et ledit second contrôleur de mémoire étant associé audit second ensemble de moyens de stockage et **en ce qu'**il comprend les étapes suivantes,
- duplication (610) d'un flux de commandes et de données à destination dudit premier contrôleur de mémoire vers ledit second contrôleur de mémoire dans un mode d'utilisation normale permettant une réplication locale de données dans ledit second ensemble de moyens de stockage,
- en réponse à une commande de réplication à distance, transmission (620) d'un flux de commandes et de données distincts à chacun desdits premier et second contrôleurs de mémoire permettant une réplication à distance de telle sorte que des éléments de données soient accessibles en lecture et en écriture dans chaque disque du premier ensemble de disques, par un premier dispositif externe, et que, de façon indépendantes, les mêmes ou d'autres éléments de données, soient accessibles en lecture seule dans chaque disque du second ensemble de disques, par un second dispositif externe; et
- synchronisation (625) pour synchroniser un ensemble de données mémorisées dans ledit second ensemble de moyens de stockage avec un ensemble de données correspondantes mémorisées dans ledit premier ensemble de moyens de stockage avant une réplication locale et suite à une réplication à distance par le second contrôleur de mémoire, à partir des données du second ensemble de moyens de stockage;
la synchronisation de la réplication locale de données entre les deux contrôleurs étant désactivée durant la phase de réplication à distance et la synchronisation de la réplication locale de données entre les deux contrôleurs étant réactivée lorsque la phase de réplication à distance est terminée.

5. Procédé selon la revendication 4 comprenant en outre une étape de duplication de données mémorisées dans un premier sous-ensemble de moyens de stockage dudit premier ensemble de moyens de stockage dans un second sous-ensemble de moyens de stockage dudit premier ensemble de moyens de stockage.

6. Procédé selon l'une quelconque des revendications 4 à 5 comprenant en outre une étape préalable de copie de données d'un troisième ensemble de moyens de stockage vers ledit premier ensemble de moyens de stockage.

7. Procédé selon l'une quelconque des revendications 4 à 6 selon lequel ladite commande de réplication à distance est générée de façon périodique.

8. Programme d'ordinateur comprenant des instructions adaptées à la mise en œuvre de chacune des étapes du procédé selon l'une quelconque des revendications 4 à 7 lorsque ledit programme est exécuté sur un ordinateur.

## Patentansprüche

1. Vorrichtung zur Datensicherung in einer IT-Infrastruktur, die Funktionen zur Wiederinbetriebnahme bietet, wobei diese Vorrichtung **dadurch gekennzeichnet ist, dass** sie die folgenden Mittel umfasst,
- mindestens einen ersten (405-1) und einen zweiten(405-2) Satz von Speichermitteln;
- mindestens einen ersten (CTL₁) und einen zweiten (*CTL₂*) Speichercontroller, wobei der erste Speichercontroller dem ersten Satz von Speichermitteln zugeordnet ist und der zweite Speichercontroller dem zweiten Satz von Speichermitteln zugeordnet ist; und
- Mikrocontroller (µP), der konfiguriert ist:
∘ zum Duplizieren eines Befehls- und Datenstroms für den ersten Speichercontroller in Richtung des zweiten Speichercontrollers in einem normalen Verwendungsmodus, der eine lokale Replikation von Daten in dem zweiten Satz von Speichermitteln ermöglicht;
∘ zum Adressieren eines separaten Befehls- und Datenstroms an jeden von dem ersten und dem zweiten Speichercontroller in einem Fernreplikationsmodus, sodass auf Datenelemente auf jeder Festplatte des ersten Satzes von Festplatten durch eine erste externe Vorrichtung lesend und schreibend zugegriffen werden kann und unabhängig davon auf dieselben oder andere Datenelemente auf jeder Festplatte des zweiten Satzes von Festplatten durch eine zweite externe Vorrichtung nur lesend zugegriffen werden kann; und
∘ zum Synchronisieren eines Satzes von Daten, die in dem zweiten Satz von Speichermitteln gespeichert sind, mit einem Satz von entsprechenden Daten, die in dem ersten Satz von Speichermitteln gespeichert sind, vor einer lokalen Replikation und nach einer Fernreplikation durch den zweiten Speichercontroller aus den Daten des zweiten Satzes von Speichermitteln;
wobei der Mikrocontroller ferner konfiguriert ist, um die Synchronisation der lokalen Datenreplikation zwischen den beiden Controllern während der Fernreplikationsphase zu deaktivieren und die Synchronisation der lokalen Datenreplikation zwischen den beiden Controllern wieder zu aktivieren, wenn die Fernreplikationsphase beendet ist.

2. Vorrichtung nach Anspruch 1, wobei der erste Satz von Speichermitteln mindestens zwei Teilsätze von Speichermitteln umfasst, die eine Duplizierung von Daten zwischen den mindestens zwei Teilsätzen von Speichermitteln ermöglichen.

3. Vorrichtung nach Anspruch 2, wobei die mindestens zwei Teilsätze von Speichermitteln konfiguriert sind, um gleiche Datenelemente zu speichern.

4. Verfahren für einen Computer zur Datensicherung in einer IT-Infrastruktur, die Funktionen zur Wiederinbetriebnahme bietet, wobei das Verfahren **dadurch gekennzeichnet ist, dass** es die Datensicherung in einer Vorrichtung ermöglicht, die mindestens einen ersten (405-1) und einen zweiten(405-2) Satz von Speichermitteln, mindestens einen ersten (CTL₁) und einen zweiten (CTL₂) Speichercontroller umfasst, wobei der erste Speichercontroller dem ersten Satz von Speichermitteln zugeordnet ist und der zweite Speichercontroller dem zweiten Satz von Speichermitteln zugeordnet ist, und dass es die folgenden Schritte umfasst,
- Duplizieren (610) eines Befehls- und Datenstroms für den ersten Speichercontroller in Richtung des zweiten Speichercontrollers in einem normalen Verwendungsmodus, der eine lokale Replikation von Daten in dem zweiten Satz von Speichermitteln ermöglicht,
- als Reaktion auf einen Befehl zur Fernreplikation, Übertragen (620) eines separaten Befehls- und Datenstroms an jeden von dem ersten und dem zweiten Speichercontroller, wodurch eine Fernreplikation ermöglicht wird, sodass auf Datenelemente auf jeder Festplatte des ersten Satzes von Festplatten durch eine erste externe Vorrichtung lesend und schreibend zugegriffen werden kann und unabhängig davon auf dieselben oder andere Datenelemente auf jeder Festplatte des zweiten Satzes von Festplatten durch eine zweite externe Vorrichtung nur lesend zugegriffen werden kann; und
- Synchronisation (625) zum Synchronisieren eines Satzes von Daten, die in dem zweiten Satz von Speichermitteln gespeichert sind, mit einem Satz von entsprechenden Daten, die in dem ersten Satz von Speichermitteln gespeichert sind, vor einer lokalen Replikation und nach einer Fernreplikation durch den zweiten Speichercontroller aus den Daten des zweiten Satzes von Speichermitteln;
wobei die Synchronisation der lokalen Datenreplikation zwischen den beiden Controllern während der Fernreplikationsphase deaktiviert wird und die Synchronisation der lokalen Datenreplikation zwischen den beiden Controllern wieder aktiviert wird, wenn die Fernreplikationsphase beendet ist.

5. Verfahren nach Anspruch 4, ferner umfassend einen Schritt des Duplizierens von Daten, die in einem ersten Teilsatz von Speichermitteln des ersten Satzes von Speichermitteln gespeichert sind, in einen zweiten Teilsatz von Speichermitteln des ersten Satzes von Speichermitteln.

6. Verfahren nach einem der Ansprüche 4 bis 5, ferner umfassend einen vorherigen Schritt des Kopierens von Daten von einem dritten Satz von Speichermitteln in den ersten Satz von Speichermitteln.

7. Verfahren nach einem der Ansprüche 4 bis 6, wobei der Befehl zur Fernreplikation periodisch erzeugt wird.

8. Computerprogramm, umfassend Anweisungen, die zum Implementieren jedes der Schritte des Verfahrens nach einem der Ansprüche 4 bis 7 angepasst sind, wenn das Programm auf einem Computer ausgeführt wird.

## Claims

1. A device for backing up data in a computer infrastructure offering disaster recovery functions, said device being **characterized in that** it comprises the following means,
- at least a first (405-1) and a second (405-2) sets of storage means;
- at least a first (CTL₁) and a second (CTL₂) memory controller, said first memory controller being associated with said first set of storage means and said second memory controller being associated with said second set of storage means; and
- microcontroller (µP) configured:
∘ for duplicating a stream of commands and data sent to said first memory controller towards said second memory controller in a normal use mode enabling a local replication of data in said second set of storage means;
∘ for addressing a stream of separate commands and data to each of said first and second memory controllers in a remote replication mode in such a way that elements of data are read/write-accessible in each disc of the first set of disks, by a first external device, and that, independently, the same or other data elements are read-only accessible in each disc of the second set of disks, by a second external device; and
∘ for synchronizing a set of data stored in said second set of storage means with a set of corresponding data stored in said first set of storage means before a local replication and after a remote replication by the second memory controller, from data of the second set of storage means;
the microcontroller being further configured for deactivating the synchronization of the local replication of data between the two controllers, during the remote replication phase and for reactivating the synchronization of the local replication of data between the two controllers when the remote replication phase is ended.

2. The device according to claim 1, wherein said first set of storage means comprises at least two storage means subsets allowing a duplication of data between said at least two storage means subsets.

3. The device according to claim 2, wherein said at least two storage means subsets are configured for storing the same data elements.

4. A computer method for data-backup in a computer infrastructure offering disaster recovery functions, this method being **characterized in that** it enables data backup in a device comprising at least a first (405-1) and a second (405-2) sets of storage means, at least a first (CTL₁) and a second (CTL₂) memory controllers, said first memory controller being associated with said first set of storage means and said second memory controller being associated with said second set of storage means and **in that** it comprises the following steps,
- duplicating (610) a stream of commands and data sent to said first memory controller towards said second memory controller in a normal use mode enabling a local replication of data in said second set of storage means,
- in response to a remote replication command, transmitting (620) a stream of separate commands and data to each of said first and second memory controllers enabling a remote replication in such a way that elements of data are read/write-accessible in each disk of the first set of disks, by a first external device, and in such a way that, independently, the same or other data elements, are read-only accessible in each disk of the second set of disks, by a second external device; and
- synchronizing (625) in order to synchronize a set of data stored in said second set of storage means with a set of corresponding data stored in said first set of storage means before a local replication and after a remote replication by the second memory controller, from data of the second set of storage means;
the synchronization of the local replication of data between the two controllers being deactivated during the remote replication phase and the synchronization of the local replication of data between the two controllers being reactivated when the remote replication phase is ended.

5. The method according to claim 4, further comprising a step of duplicating data stored in a first storage means subset of said first set of storage means in a second storage means subset of said first set of storage means.

6. The method according to either one of claims 4 to 5, further comprising a preliminary step of copying data from a third set of storage means to said first set of storage means.

7. The method according to any one of claims 4 to 6, wherein said remote replication command is generated periodically.

8. A computer program comprising instructions suitable for implementing each of the steps of the method according to any one of claims 4 to 7 when said program is executed on a computer.
